# FASCICULE DE BREVET EUROPEEN

(11) **EP 3 395 212 B1**
(45) Date de publication et mention de la délivrance du brevet: **01.12.2021**
(21) Numéro de dépôt: 18169673.3
(22) Date de dépôt: 26.04.2018
(51) Int. Cl.: A47J 31/44

(54) **MACHINE DE DISTRIBUTION DE BOISSONS EQUIPEE D'UNE TETE DE DISTRIBUTION REGLABLE EN HAUTEUR**
MASCHINE ZUR GETRÄNKEAUSGABE, DIE MIT EINEM HÖHENVERSTELLBAREN AUSGABEKOPF VERSEHEN IST
BEVERAGE DISPENSING MACHINE EQUIPPED WITH A HEIGHT-ADJUSTABLE DISPENSING HEAD

(30) Priorité: 28.04.2017 FR 1753781
(43) Date de publication de la demande: 31.10.2018
(73) Titulaire: SEB S.A., 69130 Ecully (FR)
(72) Inventeur: HIRON, Frédéric, 72130 SAINT OUEN DE MIMBRE (FR); GUERIN, Christophe, 53150 SAINT CHRISTOPHE DU LUAT (FR); DELIENS, Patrick, 53100 MAYENNE (FR)
(74) Mandataire: SEB Développement

(56) Documents cités:
- EP-A1- 1 563 775
- EP-A1- 1 745 726
- EP-A1- 2 740 391
- DE-U1- 20 017 859

## Description

La présente invention concerne une machine de distribution de boissons équipée d'une tête de distribution réglable en hauteur.

Le document EP2740391 décrit une machine de distribution de boissons comportant :
- deux tiges de guidage métalliques agencées sur la machine de distribution de boissons,
- un chariot monté coulissant sur les tiges de guidage métalliques,
- une tête de distribution qui est réglable en hauteur, la tête de distribution étant montée sur le chariot et le chariot comportant un dispositif de maintien configuré pour maintenir en position le chariot et la tête de distribution, le dispositif de maintien comportant un aimant qui coopère magnétiquement avec une des tiges de guidage métalliques.

Une telle machine de distribution de boissons permet un réglage en hauteur de la tête de distribution par rapport au support de tasse, et plus particulièrement de déplacer la tête de distribution entre une position basse dans laquelle une tasse de petite taille peut être disposée sur le support de tasse et être alimentée en boisson à partir de la tête de distribution sans risque d'éclaboussure, et une position haute dans laquelle une tasse de grande taille peut être disposée sur le support de tasse et être alimentée en boisson à partir de la tête de distribution sans risque d'éclaboussure et sans risque de conflit entre la tasse et la tête de distribution.

De plus, la coopération magnétique entre l'aimant et l'une des tiges de guidage métalliques assure une immobilisation automatique et un réglage aisé de la tête de distribution dans différentes positions d'utilisation.

Cependant, les frottements répétés de l'aimant contre la tige de guidage métallique respective, lors des déplacements verticaux du chariot le long des tiges de guidage métalliques, induisent une usure de l'aimant qui est susceptible à long terme de modifier les efforts de frottement appliqués entre l'aimant et la tige de guidage métallique respective, et donc de modifier les efforts devant être appliqués par l'utilisateur pour déplacer verticalement la tête de distribution, ce qui peut être une source d'inconfort pour l'utilisateur. De plus, une telle usure de l'aimant est susceptible de modifier le jeu entre le chariot et les tiges de guidage métalliques, ce qui peut nuire à l'aspect qualitatif de la machine de distribution de boissons lors de son utilisation par l'utilisateur.

La présente invention vise à remédier à tout ou partie de ces inconvénients.

Le problème technique à la base de l'invention consiste notamment à fournir une machine de distribution de boissons dont le dispositif de maintien garantit des efforts de frottement et des jeux de fonctionnement sensiblement constants et maitrisés dans le temps.

A cet effet, la présente invention concerne une machine de distribution de boissons comportant :
- deux tiges de guidage métalliques agencées sur la machine de distribution de boissons,
- un chariot monté coulissant sur les tiges de guidage métalliques,
- une tête de distribution qui est réglable en hauteur, la tête de distribution étant montée sur le chariot,
le chariot comportant un dispositif de maintien configuré pour maintenir en position le chariot et la tête de distribution, le dispositif de maintien comportant un aimant qui coopère magnétiquement avec une des tiges de guidage métalliques, caractérisée en ce que le dispositif de maintien comporte un élément de frottement et d'usure venant au contact de la tige de guidage métallique sous l'action de l'aimant, l'élément de frottement et d'usure étant configuré pour maintenir une distance non nulle, sensiblement constante, entre l'aimant et la tige de guidage métallique respective.

L'aimant plaque l'élément de frottement et d'usure sur la tige de guidage métallique. La présence d'un tel élément de frottement et d'usure permet d'éviter un contact direct entre l'aimant et la tige de guidage métallique. Ainsi, les efforts de manœuvre de la tête résultent des forces de frottement de l'élément de frottement et d'usure sur la tige de guidage métallique, les forces de frottement étant générées par l'aimant. En conséquence les forces de frottement entre l'élément de frottement et d'usure et la tige de guidage métallique respective sont sensiblement constantes dans le temps. Ces dispositions permettent ainsi d'assurer à l'utilisateur un confort de réglage optimal lors de la manipulation de la tête de distribution, et ce sans nécessiter par exemple un graissage des tiges de guidage susceptible de nuire à la propreté de la machine de distribution de boissons.

La présence d'un tel élément de frottement et d'usure permet également de garantir un jeu de fonctionnement sensiblement constant entre le chariot et les tiges de guidage métalliques, et donc de garantir à la machine de distribution de boissons un aspect qualitatif et un fonctionnement qualitatif lors de son utilisation.

En outre, une telle configuration du dispositif de maintien permet d'obtenir une course de réglage importante pour la tête de distribution, tout simplement en adaptant la longueur des tiges de guidage métalliques.

De plus, la valeur des efforts de frottement appliqués sur la ou les tiges de guidage peut être aisément adaptée en modifiant le nombre d'aimants prévus pour le dispositif de maintien.

La machine de distribution de boissons peut en outre présenter une ou plusieurs des caractéristiques suivantes, prises seules ou en combinaison.

Selon un mode de réalisation de l'invention, le chariot comporte un logement de réception dans lequel est, au moins en partie, reçu l'aimant. L'aimant peut par exemple être monté flottant dans le logement de réception.

Selon un mode de réalisation de l'invention, le logement de réception débouche dans une surface latérale du chariot.

Selon un mode de réalisation de l'invention, l'aimant est relié au chariot par une liaison pivot glissant.

Selon un mode de réalisation de l'invention, l'élément de frottement et d'usure est logé, au moins en partie, dans le logement de réception.

Selon un mode de réalisation de l'invention, l'élément de frottement et d'usure comporte un logement d'insertion dans lequel est insérée au moins une portion d'extrémité de l'aimant.

Selon un mode de réalisation de l'invention, l'élément de frottement et d'usure comporte une ouverture d'insertion débouchant dans le logement d'insertion. Avantageusement, le logement d'insertion est sensiblement cylindrique.

De manière avantageuse, l'aimant et l'élément de frottement et d'usure sont mobiles transversalement à la tige de guidage métallique.

Selon un mode de réalisation de l'invention, l'élément de frottement et d'usure comporte une portion de frottement et d'usure s'étendant entre l'aimant et la tige de guidage métallique respective, et plus particulièrement entre une extrémité de l'aimant et la tige de guidage métallique respective. Selon un mode de réalisation de l'invention, la portion de frottement et d'usure délimite en partie le logement d'insertion.

Selon un mode de réalisation de l'invention, la portion de frottement et d'usure présente une surface de frottement ayant une forme sensiblement complémentaire d'une portion de surface externe de la tige de guidage métallique respective.

Selon un mode de réalisation de l'invention, le logement d'insertion de l'élément de frottement et d'usure débouche dans la portion de frottement et d'usure, et par exemple dans la surface de frottement de la portion de frottement et d'usure.

Selon un mode de réalisation de l'invention, l'élément de frottement et d'usure est relié à l'aimant par une liaison pivot glissant.

Selon un mode de réalisation de l'invention, l'élément de frottement et d'usure est réalisé en matière plastique, et par exemple en polyacétal chargé en polytétrafluoroéthylène.

Selon un mode de réalisation de l'invention, l'élément de frottement et d'usure comporte au moins une partie de fixation, telle qu'un doigt de fixation, configurée pour coopérer avec une partie de fixation complémentaire, telle qu'une rainure de fixation, prévue sur le chariot.

Selon un mode de réalisation de l'invention, l'élément de frottement et d'usure est une pastille de frottement et d'usure.

Selon un mode de réalisation de l'invention, la pastille de frottement et d'usure est collée sur une extrémité de l'aimant.

Selon un mode de réalisation de l'invention, la pastille de frottement et d'usure est en polytétrafluoroéthylène.

Selon un mode de réalisation de l'invention, le chariot comporte deux orifices de guidage primaires décalés verticalement l'un par rapport à l'autre et à travers lesquels s'étend l'une des tiges de guidage métalliques, et deux orifices de guidage secondaires décalés verticalement l'un par rapport à l'autre et à travers lesquels s'étend l'autre des tiges de guidage métalliques.

Selon un mode de réalisation de l'invention, chaque orifice de guidage primaire présente une section circulaire, et chaque orifice de guidage secondaire présente une section oblongue.

Selon un mode de réalisation de l'invention, chaque orifice de guidage primaire est relié à la tige de guidage métallique respective par une liaison pivot glissant, et chaque orifice de guidage secondaire est relié à la tige de guidage métallique respective par une liaison ponctuelle ou linéaire rectiligne.

Ces dispositions garantissent un fonctionnement qualitatif et sans jeu de la machine de distribution de boissons et permettent d'obtenir de grandes courses de fonctionnement.

Selon un mode de réalisation de l'invention, l'entraxe entre les orifices de guidage primaires et les orifices de guidage secondaires est sensiblement égale à l'entraxe entre les deux tiges de guidage métalliques.

Selon un mode de réalisation de l'invention, le dispositif de maintien comporte une pluralité d'aimants coopérant magnétiquement chacun avec une des tiges de guidage métalliques.

Selon un mode de réalisation de l'invention, le dispositif de maintien comporte une pluralité d'éléments de frottement et d'usure agencés chacun entre un aimant respectif et la tige de guidage métallique respective.

Selon un mode de réalisation de l'invention, le chariot comporte une pluralité de logements de réception dans chacun desquels est, au moins en partie, reçu l'aimant respectif.

Selon un mode de réalisation de l'invention, le dispositif de maintien comporte deux aimants qui coopèrent magnétiquement avec l'une des tiges de guidage métalliques.

Selon un mode de réalisation de l'invention, le dispositif de maintien comporte en outre un aimant qui coopère magnétiquement avec l'autre des tiges de guidage métalliques.

Selon un mode de réalisation de l'invention, le chariot est monté coulissant sur les tiges de guidage métalliques selon une direction de déplacement sensiblement verticale.

Selon un mode de réalisation de l'invention, les tiges de guidage métalliques s'étendent sensiblement parallèlement l'une par rapport à l'autre.

Selon un mode de réalisation de l'invention, chacune des tiges de guidage métalliques présente une section circulaire.

Selon un mode de réalisation de l'invention, la machine de distribution de boissons comporte un support de tasse sur lequel une tasse peut être disposée, le chariot et la tête de distribution étant déplaçables verticalement par rapport au support de tasse. Avantageusement, le support de tasse est fixe. Le support de tasse peut par exemple être une grille de support.

Selon un mode de réalisation de l'invention, le ou chaque aimant est un aimant permanent.

Selon un mode de réalisation de l'invention, le chariot comporte un corps de chariot sur lequel est montée la tête de distribution. Avantageusement, le corps de chariot est réalisé en matière plastique, et par exemple en polyacétal chargé en polytétrafluoroéthylène.

Selon un mode de réalisation de l'invention, le logement de réception est prévu sur le corps de chariot.

Selon un mode de réalisation de l'invention, les tiges de guidage métalliques sont fixées sur un bâti de la machine de distribution de boissons. Avantageusement, le bâti comporte une plaque de support sur laquelle sont fixées, par exemple par encastrement, les tiges de guidage métalliques.

Selon un mode de réalisation de l'invention, le chariot comporte une portion de montage sur laquelle est montée la tête de distribution, la portion de montage s'étendant entre les deux tiges de guidages métalliques.

Selon un mode de réalisation de l'invention, le ou chaque logement de réception est prévu sur la portion de montage.

De manière avantageuse, l'élément de frottement et d'usure maintient l'aimant à une distance D de la tige de guidage métallique, cette distance D étant comprise entre 0.1 et 0.3 millimètres, de préférence égale à 0.2 millimètres.

L'invention sera bien comprise à l'aide de la description qui suit en référence aux dessins schématiques annexés représentant, à titre d'exemples non limitatifs, deux formes d'exécution de cette machine de distribution de boissons.
La figure 1 est une vue en perspective d'une machine de distribution de boissons selon un premier mode de réalisation de l'invention.
La figure 2 est une vue partielle en perspective de la machine de distribution de boissons de la figure 1.
La figure 3 est une vue en perspective d'un chariot et de deux tiges de guidage de la machine de distribution de boissons de la figure 1.
La figure 4 est une vue éclatée en perspective du chariot de la figure 3.
La figure 5 est une vue en coupe du chariot de la figure 3.
La figure 6 est une vue éclatée en perspective d'un chariot d'une machine de distribution de boissons selon un deuxième mode de réalisation de l'invention.

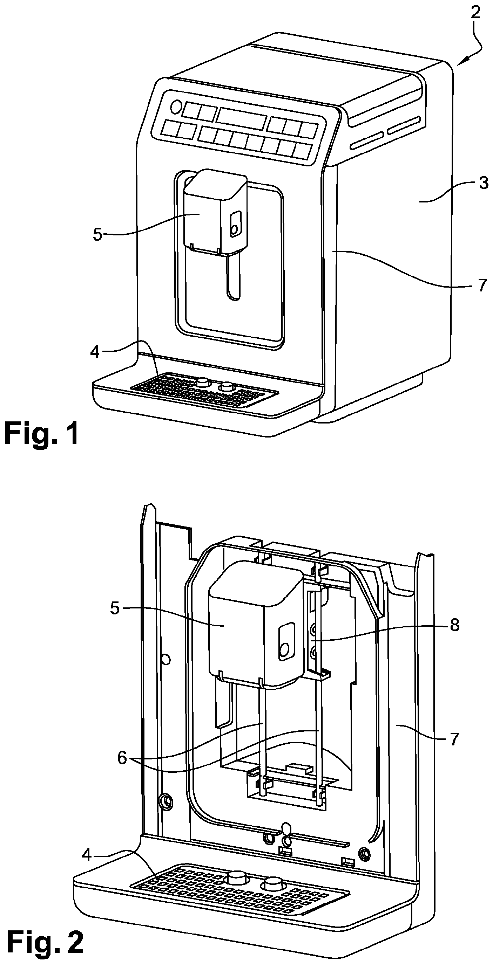

Les figures 1 à 5 représentent une machine de distribution de boissons 2 adaptée pour distribuer notamment du café, des boissons lactées ou encore du thé.

La machine de distribution de boissons 2 comporte notamment un bâti 3, un support de tasse 4 sur lequel une tasse peut être disposée, et une tête de distribution 5 réglable en hauteur. Le support de tasse 4 peut par exemple comporter une grille de support.

La machine de distribution de boissons 2 comporte également deux tiges de guidage métalliques 6 qui s'étendent sensiblement parallèlement l'une par rapport à l'autre. Les tiges de guidage métalliques 6 sont fixées, par exemple par encastrement, sur le bâti 3, et plus particulièrement sur une plaque de support 7 qui est sensiblement verticale et qui appartient au bâti 3. Les tiges de guidage métalliques 6 sont en particulier immobiles en translation par rapport au bâti 3 et s'étendent sensiblement verticalement. Chacune des tiges de guidage métalliques 6 présente avantageusement une section circulaire.

La machine de distribution de boissons 2 comporte en outre un chariot 8 monté coulissant sur les tiges de guidage métalliques 6 selon une direction de déplacement sensiblement verticale, et sur lequel est montée la tête de distribution 5.

Ainsi, la tête de distribution 5 est déplaçable verticalement par rapport au support de tasse 4 entre une position basse dans laquelle une tasse de petite taille, telle qu'une tasse destinée à contenir un ristretto, peut être disposée sur le support de tasse 4 et être alimentée en boisson, par exemple en café, à partir de la tête de distribution 5 sans risque d'éclaboussure, et une position haute dans laquelle une tasse de grande taille, telle qu'un mug, peut être disposée sur le support de tasse 4 et être alimentée en boisson, par exemple en eau, à partir de la tête de distribution 5 sans risque d'éclaboussure.

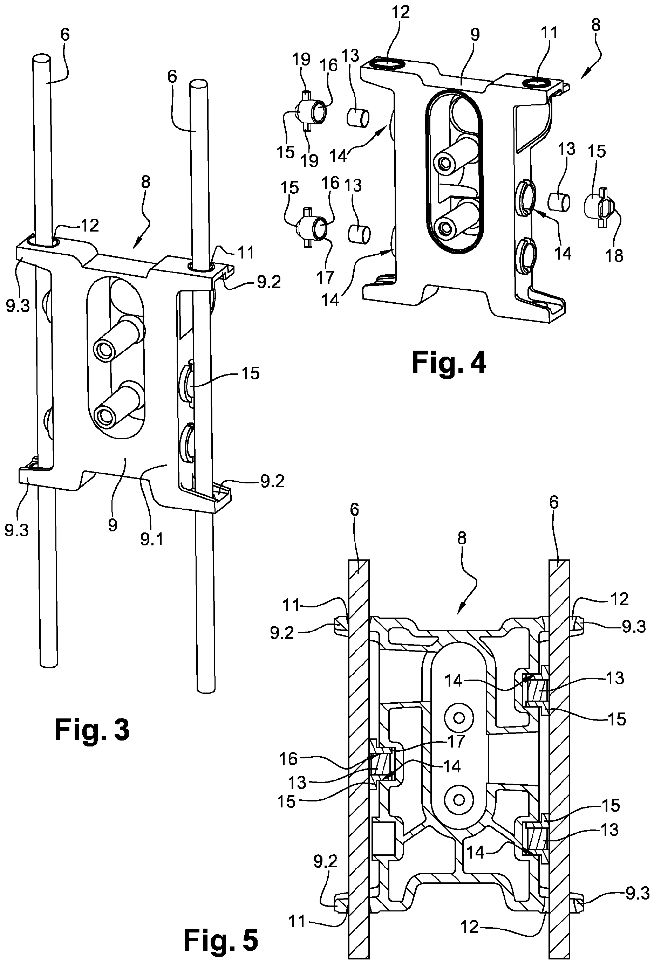

Comme montré sur les figures 3 à 5, le chariot 8 comporte plus particulièrement un corps de chariot 9 comportant une portion de montage 9.1 qui est disposée entre les deux tiges de guidages métalliques 6 et sur laquelle est montée la tête de distribution 5, par exemple par montage en force et/ou par bridage à l'aide de vis de fixation. Le corps de chariot 9 est avantageusement réalisé en matière plastique, et par exemple en polyacétal chargé en polytétrafluoroéthylène.

Le corps de chariot 9 comporte également deux portions de guidage primaires 9.2 décalées verticalement l'une par rapport à l'autre et disposées d'un premier côté de la portion de montage 9.1, et deux portions de guidage secondaires 9.3 décalées verticalement l'une par rapport à l'autre et disposées d'un deuxième côté de la portion de montage 9.1. Chaque portion de guidage primaire 9.2 est pourvue d'un orifice de guidage primaire 11, et chaque portion de guidage secondaire 9.3 est pourvue d'un orifice de guidage secondaire 12. Comme montré plus particulièrement sur la figure 3, l'une des tiges de guidage 6 s'étend à travers les orifices de guidage primaires 11, tandis que l'autre des tiges de guidage 6 s'étend à travers les orifices de guidage secondaires 12.

Selon le mode de réalisation représenté sur les figures 1 à 5, chaque orifice de guidage primaire 11 présente une section circulaire, et chaque orifice de guidage secondaire 12 présente une section oblongue. Ainsi, chaque orifice de guidage primaire 11 est relié à la tige de guidage métallique 6 respective par une liaison pivot glissant, et chaque orifice de guidage secondaire 12 est relié à la tige de guidage métallique 6 respective par une liaison ponctuelle.

Le chariot 8 comporte de plus un dispositif de maintien configuré pour maintenir en position le chariot 8 et la tête de distribution 5 par rapport aux tiges de guidage métalliques 6.

Le dispositif de maintien comporte une pluralité d'aimants 13 qui coopèrent chacun magnétiquement avec une des tiges de guidage métalliques 6. Selon le mode de réalisation représenté sur les figures 1 à 5, le dispositif de maintien comporte deux aimants 13 qui coopèrent magnétiquement avec la tige de guidage métallique 6 s'étendant dans les orifices de guidage secondaires 12, et un aimant 13 qui coopère magnétiquement avec la tige de guidage métallique 6 s'étendant dans les orifices de guidage primaires 11. Avantageusement, chaque aimant 13 est un aimant permanent, et présente une forme générale cylindrique.

Chaque aimant 13 est logé dans un logement de réception 14 respectif ménagé sur la portion de montage 9.1 du corps de montage 9 et débouchant dans une surface latérale respective de la portion de montage 9.1. Chaque logement de réception 14 présente avantageusement une forme générale cylindrique.

Le dispositif de maintien comporte en outre une pluralité d'éléments de frottement et d'usure 15 agencés chacun entre un aimant 13 respectif et la tige de guidage métallique 6 respective. Chaque élément de frottement et d'usure 15 est avantageusement réalisé en matière plastique, et peut par exemple être réalisé en polyacétal chargé en polytétrafluoroéthylène. Chaque élément de frottement et d'usure 15 est de préférence configuré pour maintenir une distance sensiblement constante entre l'aimant 13 respectif et la tige de guidage métallique 6 respective.

Selon le mode de réalisation représenté sur les figures 1 à 4, chaque élément de frottement et d'usure 15 comporte un logement d'insertion 16 dans lequel est inséré, au moins en partie, l'aimant 13 respectif, et une ouverture d'insertion 17 débouchant dans le logement d'insertion 16 respectif et destinée au passage de l'aimant 13 respectif. Selon le mode de réalisation représenté sur les figures, chaque logement d'insertion 16 est sensiblement cylindrique et reçoit au moins la portion d'extrémité de l'aimant 13 respectif qui est tournée vers la tige de guidage métallique 6 respective. Avantageusement, chaque élément de frottement et d'usure 15 est logé, au moins en partie, dans le logement de réception 14 recevant l'aimant 13 respectif.

Chaque élément de frottement et d'usure 15 comporte une portion de frottement et d'usure 18 s'étendant entre une extrémité de l'aimant 13 respectif et la tige de guidage métallique 6 respective. Avantageusement, chaque portion de frottement et d'usure 18 est opposée à l'ouverture d'insertion 17 respective, et présente une surface de frottement ayant une forme sensiblement complémentaire d'une portion de surface externe de la tige de guidage métallique 6 respective. Selon le mode de réalisation représenté sur les figures, le logement d'insertion 16 de chaque élément de frottement et d'usure 15 débouche dans la portion de frottement et d'usure 18 respective, et plus particulièrement dans la surface de frottement de la portion de frottement et d'usure 18 respective.

Chaque élément de frottement et d'usure 15 comporte également deux parties de fixation 19, telles que des doigts de fixation diamétralement opposés, configurées pour coopérer chacune avec des parties de fixation complémentaires, telle que des rainures de fixation, prévues sur la portion de montage 9.1 du corps de chariot 9.

La présence d'un tel élément de frottement et d'usure 15 permet d'une part de prévenir l'usure de l'aimant, et donc de garantir des efforts de frottement entre l'aimant et la tige de guidage métallique respective sensiblement constants dans le temps, et d'autre part de garantir un jeu de fonctionnement sensiblement constant entre le chariot et les tiges de guidage métalliques. Ces dispositions permettent ainsi d'assurer à l'utilisateur un confort de réglage optimal de la position de la tête de distribution en fonction du type de tasse utilisée, et de garantir à la machine de distribution de boissons un aspect qualitatif lors de son util isation.

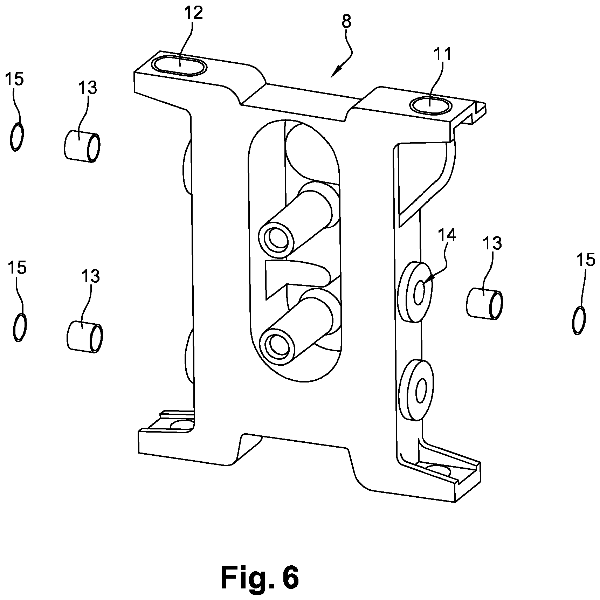

La figure 6 représente un chariot 8 d'une machine de distribution de boissons 2 selon un deuxième mode de réalisation de l'invention qui diffère de celle représentée sur les figures 1 à 5 essentiellement en ce que chaque élément de frottement et d'usure 15 est formé par une pastille de frottement et d'usure fixée, par exemple par collage, sur une surface d'extrémité de l'aimant 13 respectif. Selon un tel mode de réalisation de l'invention, chaque pastille de frottement et d'usure 15 peut par exemple être réalisée en polytétrafluoroéthylène.

Comme il va de soi, l'invention ne se limite pas aux seules formes d'exécution de cette machine de distribution de boissons, décrites ci-dessus à titre d'exemples, elle en embrasse au contraire toutes les variantes de réalisation.

## Revendications

1. Machine de distribution de boissons (2) comportant :
- deux tiges de guidage métalliques (6) agencées sur la machine de distribution de boissons,
- un chariot (8) monté coulissant sur les tiges de guidage métalliques (6),
- une tête de distribution (5) qui est réglable en hauteur, la tête de distribution (5) étant montée sur le chariot (8),
le chariot (8) comportant un dispositif de maintien configuré pour maintenir en position le chariot (8) et la tête de distribution (5), le dispositif de maintien comportant un aimant (13) qui coopère magnétiquement avec une des tiges de guidage métalliques (6), **caractérisée en ce que** le dispositif de maintien comporte un élément de frottement et d'usure (15) venant au contact de la tige de guidage métallique (6) sous l'action de l'aimant (13), l'élément de frottement et d'usure (15) étant configuré pour maintenir une distance non nulle, sensiblement constante, entre l'aimant (13) et la tige de guidage métallique (6) respective.

2. Machine de distribution de boissons (2) selon la revendication 1, dans laquelle le chariot (8) comporte un logement de réception (14) dans lequel est, au moins en partie, reçu l'aimant (13).

3. Machine de distribution de boissons (2) selon la revendication 2, dans laquelle l'élément de frottement et d'usure (15) est logé, au moins en partie, dans le logement de réception (14).

4. Machine de distribution de boissons (2) selon l'une quelconque des revendications 1 à 3, dans laquelle l'élément de frottement et d'usure (15) comporte un logement d'insertion (16) dans lequel est insérée au moins une portion d'extrémité de l'aimant (13).

5. Machine de distribution de boissons (2) selon l'une quelconque des revendications 1 à 3, dans laquelle l'élément de frottement et d'usure (15) est une pastille de frottement et d'usure.

6. Machine de distribution de boissons (2) selon la revendication 5, dans laquelle la pastille de frottement et d'usure est collée sur une extrémité de l'aimant (13).

7. Machine de distribution de boissons (2) selon la revendication 5 ou 6, dans laquelle la pastille de frottement et d'usure est en polytétrafluoroéthylène.

8. Machine de distribution de boissons (2) selon l'une quelconque des revendications 1 à 7, dans laquelle le chariot (8) comporte deux orifices de guidage primaires (11) décalés verticalement l'un par rapport à l'autre et à travers lesquels s'étend l'une des tiges de guidage métalliques (6), et deux orifices de guidage secondaires (12) décalés verticalement l'un par rapport à l'autre et à travers lesquels s'étend l'autre des tiges de guidage métalliques (6).

9. Machine de distribution de boissons (2) selon la revendication 8, dans laquelle chaque orifice de guidage primaire (11) présente une section circulaire, et chaque orifice de guidage secondaire (12) présente une section oblongue.

10. Machine de distribution de boissons (2) selon la revendication 8 ou 9, dans laquelle chaque orifice de guidage primaire (11) est relié à la tige de guidage métallique (6) respective par une liaison pivot glissant, et chaque orifice de guidage secondaire (12) est relié à la tige de guidage métallique (6) respective par une liaison ponctuelle ou linéaire rectiligne.

11. Machine de distribution de boissons (2) selon l'une quelconque des revendications 1 à 10, dans laquelle le dispositif de maintien comporte deux aimants (13) qui coopèrent magnétiquement avec l'une des tiges de guidage métalliques (6).

12. Machine de distribution de boissons (2) selon la revendication 11, dans laquelle le dispositif de maintien comporte en outre un aimant (13) qui coopère magnétiquement avec l'autre des tiges de guidage métalliques (6).

## Patentansprüche

1. Getränkeausgabemaschine (2) mit:
- zwei Metallführungsstangen (6), die an der Getränkeausgabemaschine angeordnet sind,
- einen Schlitten (8), der gleitend auf den Metallführungsstangen (6) angebracht ist,
- einen Ausgabekopf (5), der in der Höhe verstellbar ist, wobei der Ausgabekopf (5) auf dem Schlitten (8) angebracht ist,
wobei der Schlitten (8) eine Haltevorrichtung umfasst, die so konfiguriert ist, dass sie den Schlitten (8) und den Ausgabekopf (5) in Position hält, wobei die Haltevorrichtung einen Magneten (13) umfasst, der magnetisch mit einer der Metallführungsstangen (6) zusammenwirkt, **dadurch gekennzeichnet, dass** die Haltevorrichtung ein Reibungs- und Abnutzungselement (15) umfasst, das unter der Einwirkung des Magneten (13) in die Metallführungsstange (6) eingreift, wobei das Reibungs- und Abnutzungselement (15) so konfiguriert ist, dass es einen im Wesentlichen konstanten Abstand ungleich null zwischen dem Magneten (13) und der jeweiligen Metallführungsstange (6) aufrechterhält.

2. Getränkeausgabemaschine (2) nach Anspruch 1, wobei der Schlitten (8) ein Aufnahmegehäuse (14) aufweist, in dem der Magnet (13) zumindest teilweise aufgenommen ist.

3. Getränkeausgabemaschine (2) nach Anspruch 2, wobei das Reibungs- und Abnutzungselement (15) zumindest teilweise im Aufnahmegehäuse (14) untergebracht ist.

4. Getränkeausgabemaschine (2) nach einem der Ansprüche 1 bis 3, wobei das Reibungs- und Abnutzungselement (15) eine Einführungsgehäuse (16) aufweist, in das mindestens ein Endabschnitt des Magneten (13) eingeführt wird.

5. Getränkeausgabemaschine (2) nach einem der Ansprüche 1 bis 3, wobei das Reibungs- und Abnutzungselement (15) eine Reibungs- und Abnutzungsscheibe ist.

6. Getränkeausgabemaschine (2) nach Anspruch 5, wobei die Reibungs- und Abnutzungsscheibe mit einem Ende des Magneten (13) verklebt ist.

7. Getränkeausgabemaschine (2) nach Anspruch 5 oder 6, wobei die Reibungs- und Abnutzungsscheibe aus Polytetrafluorethylen besteht.

8. Getränkeausgabemaschine (2) nach einem der Ansprüche 1 bis 7, wobei der Schlitten (8) zwei primäre Führungsöffnungen (11) aufweist, die vertikal zueinander versetzt sind und durch die sich eine der Metallführungsstangen (6) erstreckt, und zwei sekundäre Führungsöffnungen (12), die vertikal zueinander versetzt sind und durch die sich die andere der Metallführungsstangen (6) erstreckt.

9. Getränkeausgabemaschine (2) nach Anspruch 8, wobei jede primäre Führungsöffnung (11) einen kreisförmigen Querschnitt und jede sekundäre Führungsöffnung (12) einen länglichen Querschnitt aufweist.

10. Getränkeausgabemaschine (2) nach Anspruch 8 oder 9, wobei jede primäre Führungsöffnung (11) mit der jeweiligen Metallführungsstange (6) durch eine gleitende Schwenkverbindung verbunden ist und jede sekundäre Führungsöffnung (12) mit der jeweiligen Metallführungsstange (6) durch eine lineare Punkt- oder Geradenverbindung verbunden ist.

11. Getränkeausgabemaschine (2) nach einem der Ansprüche 1 bis 10, **dadurch gekennzeichnet, dass** die Haltevorrichtung zwei Magnete (13) umfasst, die mit einer der Metallführungsstangen (6) magnetisch zusammenwirken.

12. Getränkeausgabemaschine (2) nach Anspruch 11, wobei die Haltevorrichtung weiter einen Magneten (13) aufweist, der mit der anderen der Metallführungsstangen (6) magnetisch zusammenwirkt.

## Claims

1. Beverage dispensing machine (2) comprising:
- two metal guide rods (6) arranged on the beverage dispensing machine,
- a carriage (8) slidingly mounted on the metal guide rods (6),
- a dispensing head (5) which is height-adjustable, the dispensing head (5) being mounted on the carriage (8),
the carriage (8) comprising a holding device configured to hold the carriage (8) and the dispensing head (5) in position, the holding device comprising a magnet (13) which engages magnetically with one of the metal guide rods (6), **characterised in that** the holding device comprises a friction and wear element (15) coming into contact with the metal guide rod (6) under the action of the magnet (13), the friction and wear element (15) being configured to maintain a non-zero distance, substantially constant, between the magnet (13) and the respective metal guide rod (6).

2. Beverage dispensing machine (2) according to claim 1, wherein the carriage (8) comprises a receiving housing (14) wherein the magnet (13) is, at least partially, received.

3. Beverage dispensing machine (2) according to claim 2, wherein the friction and wear element (15) is housed, at least partially, in the receiving housing (14).

4. Beverage dispensing machine (2) according to any one of claims 1 to 3, wherein the friction and wear element (15) comprises an insertion housing (16) wherein at least one end portion of the magnet (13) is inserted.

5. Beverage dispensing machine (2) according to any one of claims 1 to 3, wherein the friction and wear element (15) is a friction and wear pad.

6. Beverage dispensing machine (2) according to claim 5, wherein the friction and wear pad is glued on an end of the magnet (13).

7. Beverage dispensing machine (2) according to claim 5 or 6, wherein the friction and wear pad is made of polytetrafluoroethylene.

8. Beverage dispensing machine (2) according to any one of claims 1 to 7, wherein the carriage (8) comprises two primary guide orifices (11) vertically offset against one another and through which one of the metal guide rods (6) extends, and two secondary guide orifices (12) vertically offset against one another and through which the other of the metal guide rods (6) extends.

9. Beverage dispensing machine (2) according to claim 8, wherein each primary guide orifice (11) has a circular cross-section, and each secondary guide orifice (12) has an oblong cross-section.

10. Beverage dispensing machine (2) according to claim 8 or 9, wherein each primary guide orifice (11) is connected to the respective metal guide rod (6) by a sliding pivot connection, and each secondary guide orifice (12) is connected to the respective metal guide rod (6) by an isolated or rectilinearly linear connection.

11. Beverage dispensing machine (2) according to any one of claims 1 to 10, wherein the holding device comprises two magnets (13) which magnetically engage with one of the metal guide rods (6).

12. Beverage dispensing machine (2) according to claim 11, wherein the holding device further comprises a magnet (13) which magnetically engages with the other of the metal guide rods (6).
